(19) **Europäisches Patentamt / European Patent Office / Office européen des brevets**

(11) **EP 3 308 120 B1**

(12) **FASCICULE DE BREVET EUROPEEN**

(45) Date de publication et mention de la délivrance du brevet:
**06.05.2020 Bulletin 2020/19**

(21) Numéro de dépôt: **16733654.4**

(22) Date de dépôt: **02.06.2016**

(51) Int Cl.:
*G01L 5/16* (2020.01)    *G01N 19/02* (2006.01)

(86) Numéro de dépôt international:
**PCT/FR2016/051316**

(87) Numéro de publication internationale:
**WO 2016/198766 (15.12.2016 Gazette 2016/50)**

(54) **DISPOSITIF DE MESURE D'EFFORTS À PRÉCISION ÉLEVÉE**

HOCHGENAUE VORRICHTUNG ZUR MESSUNG VON KRÄFTEN

HIGH-PRECISION DEVICE FOR MEASURING FORCES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.06.2015 FR 1555388**

(43) Date de publication de la demande:
**18.04.2018 Bulletin 2018/16**

(73) Titulaires:
• **Ecole Centrale de Lyon**
**69134 Ecully Cedex (FR)**
• **Centre National de la Recherche Scientifique**
**75016 Paris (FR)**
• **Ecole Nationale d'Ingénieurs de Saint-Etienne**
**42100 Saint-Etienne (FR)**

(72) Inventeurs:
• **GUIBERT, Matthieu**
**69009 Lyon (FR)**
• **FONTAINE, Julien**
**69890 La Tour de Salvagny (FR)**
• **DURAND, Thibaut**
**91470 Limours (FR)**
• **LE MOGNE, Thierry**
**69210 Lentilly (FR)**

(74) Mandataire: **GIE Innovation Competence Group**
**310, avenue Berthelot**
**69372 Lyon Cedex 08 (FR)**

(56) Documents cités:
**WO-A1-2012/153643    US-A1- 2011 239 783 US-B1- 6 363 798**

• **HIRZINGER G ET AL: "MULTI-SENSOR-SYSTEM FUR ROBOTER", TECHNISCHES MESSEN TM, R.OLDENBOURG VERLAG. MUNCHEN, DE, vol. 53, no. 7/08, 1 janvier 1986 (1986-01-01), pages 286-292, XP000003877, ISSN: 0171-8096**

## Description

L'invention concerne les dispositifs de mesure d'efforts, en particulier les dispositifs de mesure d'efforts pour laboratoire impliquant une grande précision des mesures.

Les dispositifs de mesure d'efforts sont par exemple utilisés dans le domaine de la tribologie afin de déterminer un coefficient de frottement entre deux solides. Dans un certain nombre d'applications, les niveaux d'efforts mesurés sont relativement réduits et toute imprécision ou perturbation de mesure peut induire des erreurs dépassant l'ordre de grandeur des efforts à mesurer. Certaines mesures réalisées sous vide ou dans des atmosphères contrôlées exigent notamment des précisions de mesure d'efforts que les dispositifs de mesure connus sont incapables de fournir.

Pour une application en tribologie, on doit mesurer à la fois un effort tangentiel et un effort normal sur un échantillon. Toute imprécision d'alignement des axes de mesure altère fortement la précision des mesures suivant ces axes, et donc le coefficient de frottement calculé par ce biais. Par ailleurs, les dispositifs de mesure d'efforts connus permettent difficilement de dissocier le niveau de précision ou le niveau d'efforts selon différents axes de mesure.

Le document WO2012/153643 décrit un dispositif de mesure d'efforts. Le dispositif inclut un premier corps destiné à être immobilisé, un deuxième corps guidé selon une première direction de translation par rapport au premier corps par l'intermédiaire d'au moins une première liaison déformable élastiquement. Un troisième corps est sollicité et guidé selon trois degrés de liberté par rapport au deuxième corps. Des capteurs sans contact mesurent le déplacement du troisième corps par rapport au premier corps selon des directions respectives non confondues mais parallèles.

Le document Hirzinger 'Multi sensor system fur roboter', publié Technisches Messen TM, R.Oldenbourg Verlag. Munchen, DE, vol. 53, N° 7/08, 1er Janvier 1986, aux pages 286-292, décrit un capteur multi-axes pour un robot. Ce document décrit un organe de commande de type Joystick avec une sphère pour laquelle on mesure les efforts appliqués par rapport à un socle. Le document décrit l'utilisation de capteurs sans contact, sans détailler l'implantation de tels capteurs.

Le document US2011/239783 décrit un capteur d'effort. Deux pièces sont reliées par des piliers rigides pour transmettre des efforts entre ces deux pièces. Une première pièce reçoit des efforts, qu'elle répercute avec un effet de levier sur la deuxième pièce, par l'intermédiaire des piliers. La deuxième pièce est munie de capteurs piézoélectriques de déformation montés dans un pont de Wheatstone.

Le document US6363798 une géométrie de poutre de support d'un capteur de friction. Une capacité de flexion de la poutre est obtenue par des fentes traversantes dans la poutre, s'étendant selon des directions différentes. Les capteurs de friction sont montés par paires pour mesurer des efforts selon des directions opposées et compenser des défauts d'équilibrage potentiels. Les capteurs de mesure sont des capteurs de contrainte piézoélectriques.

Le document US2013/0061689 décrit un dispositif de mesure d'efforts. Ce dispositif comporte deux masselottes en forme de parallélépipède. Les masselottes comportent des surfaces de montage parallèles. Les masselottes sont superposées et reliées par quatre parois verticales. L'épaisseur de ces parois est nettement inférieure à leur longueur, leur longueur définissant l'espacement entre les masselottes. Les masselottes peuvent ainsi être déplacées l'une par rapport à l'autre suivant des directions transversales à ces parois. Chaque paroi est équipée d'un capteur de mesure d'efforts, combinant de multiples jauges de contraintes présentant différentes orientations. Les jauges des différentes parois sont connectées dans des ponts de Wheatstone et permettent de déterminer des forces selon différents axes.

Un tel dispositif présent un certain nombre d'inconvénients. La précision sur les axes mesurés est insuffisante pour discriminer une force tangentielle et une force normale par exemple par ailleurs, la linéarité de la mesure d'efforts avec un tel dispositif est insuffisante et n'est donc utilisable que pour une gamme réduite d'efforts. Par ailleurs, la précision de mesure d'un tel dispositif est insuffisante, en particulier dans une application de mesure de coefficients de frottement très réduits.

Le document décrit un dispositif de mesure d'efforts, comprenant une platine d'application d'effort, relié à un support par l'intermédiaire de 4 bras disposés en croix. Ces 4 bras comportent 4 transducteurs électro-magnétiques respectifs. Ces transducteurs électro-magnétiques mesurent chacun un déplacement vertical du dispositif de mesure d'efforts. Les différents efforts sont déterminés de façon simplifiée à partir de ces différents déplacements verticaux.

Un tel dispositif présente des inconvénients. La précision de mesure est relativement limitée. Par ailleurs, une erreur impacte l'ensemble des mesures de déplacement.

L'invention vise à résoudre un ou plusieurs de ces inconvénients. L'invention porte ainsi sur un dispositif de mesure d'efforts, tel que défini dans la revendication 1. L'invention porte également sur les variantes des revendications dépendantes. L'homme du métier comprendra que chacune des caractéristiques de ces revendications dépendantes peut être combinée indépendamment aux caractéristiques ci-dessus, sans pour autant constituer une généralisation intermédiaire.

D'autres caractéristiques et avantages de l'invention ressortiront clairement de la description qui en est faite ci-après, à titre indicatif et nullement limitatif, en référence aux dessins annexés, dans lesquels :

- les figures 1 à 3 sont respectivement des vues de dessus, de face et en perspective d'un dispositif de mesure d'efforts selon un exemple de mode de réalisation de l'invention ;
- les figures 4 et 5 sont des vues en coupe du dispositif de mesure d'efforts selon la figure 1 ;
- la figure 6 est une vue en coupe de détail d'une variante du dispositif de mesure d'efforts de la figure 1 ;
- la figure 7 est une vue en perspective d'une embase du dispositif de mesure d'efforts de la figure 1 ;
- les figures 8 et 9 sont respectivement des vues en perspectives et de dessus d'un corps fixe du dispositif de mesure d'efforts de la figure 1 ;
- les figures 10 et 11 sont des vues en coupe du corps fixe du dispositif de mesure d'efforts de la figure 1 ;
- la figure 12 est une vue en perspective d'une bride pour un capteur de déplacement ;
- la figure 13 est une vue de côté d'une bague de serrage pour le corps fixe;
- la figure 14 est une vue de dessus d'un élément de liaison avec le corps fixe ;
- la figure 15 est une vue en perspective d'un corps mobile intermédiaire ;
- la figure 16 est une vue en perspective d'une entretoise pour le corps mobile intermédiaire ;
- les figures 17 et 18 illustrent une bague de serrage pour le corps mobile intermédiaire ;
- la figure 19 est une vue en perspective d'une plaque annulaire fixée sur la bague de serrage de la figure 17 ;
- les figures 20 et 21 illustrent une plaque annulaire d'un corps mobile porte échantillon ;
- la figure 22 est une vue en perspective des plaques annulaires solidarisées par des tiges flexibles ;
- les figures 23 et 24 illustrent une platine porte échantillon sur lequel la plaque annulaire de la figure 20 est fixée
- la figure 25 est une vue en perspective d'un support pour miroir ;

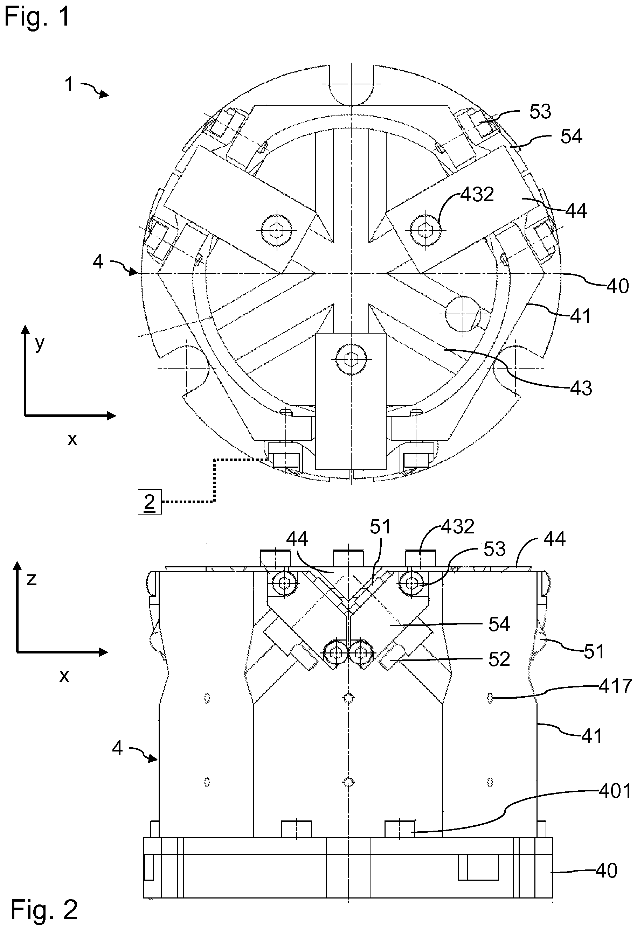

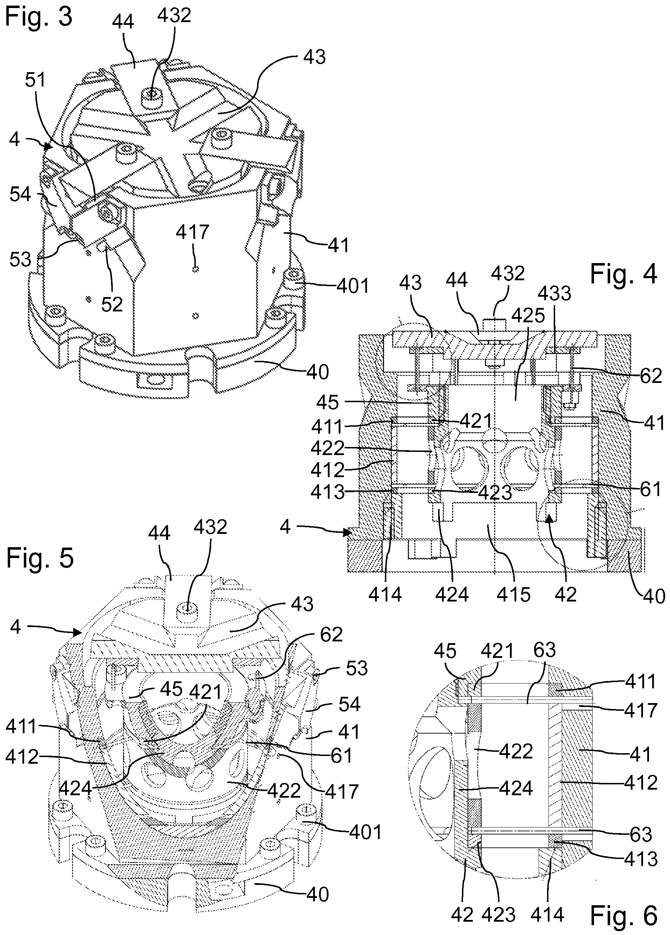

Les figures 1 à 3 sont respectivement des vues de dessus, de face et en perspective d'un dispositif de mesure d'efforts 1 selon un exemple de mode de réalisation de l'invention. Le dispositif 1 comporte notamment un dispositif de traitement 2 et un support 4 (destiné à être sollicité ou destiné à recevoir un échantillon à solliciter) comportant des capteurs de déplacement connectés au dispositif de traitement 2. Les figures 4 et 5 sont des vues en coupe du support 4.

Le support 4 comporte une embase 40 et un corps fixe 41 fixés sur l'embase 40 par l'intermédiaire de vis 401. Des capteurs de déplacement sans contact 51 sont fixés sur une paroi externe du corps fixe 41 par l'intermédiaire de brides 54 et de vis 53. Les capteurs sans contact 51 sont ici de type capacitif et mesurent l'espacement entre le capteur 51 et une paroi métallique respective d'un support 44. Les capteurs 51 comportent des connecteurs 52 raccordés au dispositif de traitement 2.

Le corps fixe 41 comporte une partie tubulaire verticale. Le corps fixe 41 comporte un alésage central, vertical et traversant 415, ménagé dans la partie tubulaire. Un corps mobile intermédiaire 42 est logé dans l'alésage 415. Le corps mobile intermédiaire 42 est relié au corps fixe 41 par l'intermédiaire d'au moins une première liaison déformable élastiquement. La liaison déformable élastiquement est notamment destinée à permettre un déplacement du corps mobile intermédiaire 42 par rapport au corps fixe 41, en translation suivant l'axe Z, et en rotation autour de l'axe Z. Les translations selon les axes X et Y sont globalement bloquées.

L'élément de liaison comporte ici deux pièces de liaison 61 davantage détaillées par la suite. Du fait de l'utilisation de deux pièces de liaison superposées et espacées selon l'axe Z, des rotations autour des axes X et Y sont globalement bloquées.

Un épaulement est ménagé dans l'alésage 415. Le corps fixe 41 comporte en outre une bague de serrage 414 vissée à l'intérieur de l'alésage 415. Une entretoise 411, un anneau externe 611 (d'une pièce de liaison 61), une entretoise 422, un autre anneau externe 611 (d'une autre pièce de liaison 61) et une entretoise 413 sont comprimés dans cet ordre entre la bague de serrage 414 et l'épaulement ménagé dans l'alésage 415.

Le corps mobile intermédiaire 42 comporte une partie tubulaire munie d'un épaulement dans sa partie inférieure. Le corps mobile intermédiaire 42 comporte en outre une bague de serrage 45 sur laquelle est vissée la partie tubulaire. Une entretoise 421, un anneau interne 613 (d'une pièce de liaison 61), une entretoise 422, un autre anneau interne 613 (d'une autre pièce de liaison 61) et une entretoise 423 sont comprimés dans cet ordre entre la bague de serrage 45 et l'épaulement de la partie tubulaire. Chaque anneau interne 613 est relié à un anneau externe concentrique 611, par l'intermédiaire de plusieurs tiges 612 détaillées ultérieurement. La pièce de liaison 61 comporte ici trois tiges réparties angulairement autour de l'anneau interne 613 et s'étendant radialement entre l'anneau interne 613 et l'anneau externe 611.

Une plaque annulaire 436 est vissée sur la bague de serrage 45 du corps mobile intermédiaire 42. Des pièces de liaison 62 (en l'occurrence sous forme de tiges) sont encastrées par une extrémité dans la plaque annulaire 436 et s'étendent selon la direction Z. Les pièces de liaison 62 sont par ailleurs encastrées par une autre extrémité dans une autre plaque annulaire 456.

La plaque annulaire 456 appartient à un corps de support mobile 43. Le corps de support mobile 43 et ainsi relié au corps mobile intermédiaire 42 par l'intermédiaire d'une deuxième liaison déformable élastiquement. La liaison déformable élastiquement est notamment destinée à permettre un déplacement du corps mobile 43 par rapport au corps mobile intermédiaire 42, en translation suivant les axes X et Y. La translation selon l'axe Z et globalement bloquée par la rigidité des pièces de liaison 62 suivant cet axe.

Ce corps de support 43 est par exemple destiné à la fixation d'un échantillon ou d'un porte échantillon sur lequel des efforts doivent être appliqués. Une platine porte échantillon 437 est fixée sur la plaque annulaire 456. Un support pour miroir 44 est fixé sur la platine 437 par l'intermédiaire de vis 432. Les capteurs de déplacement 51 sont en pratique fixés en vis-à-vis de surfaces respectives du support 44, de sorte que la variation de distance entre un capteur 51 et sa surface en vis-à-vis implique une variation de la capacité formée entre le capteur 51 et cette surface.

Du fait de l'utilisation de capteurs de déplacement sans contact 51, la mesure de déplacement n'induit pas de contraintes parasites durant un déplacement relatif entre le corps fixe 41 et le corps mobile de support 43.

En fonction des différents déplacements mesurés par les capteurs 51 entre le corps mobile 43 et le corps fixe 41, le dispositif de traitement 2 extrapole les efforts appliqués sur le corps mobile 43 selon différents axes : par exemple une force appliquée selon les axes X, Y ou Z, ou un couple appliqué autour des axes X, Y ou Z.

La matrice de transformation des déplacements en efforts peut-être étalonnée selon une procédure prédéfinie. On peut par exemple fixer un cadre de sollicitations sur le corps mobile 43, pour exercer différents efforts et/ou couple calibré sur ce corps 43. Une interface homme/machine pilotée par le dispositif de traitement 2 peut par exemple solliciter l'utilisateur pour qu'il positionne des masses calibrées en des emplacements appropriés du cadre de sollicitation, par exemple plus ou moins excentrés de l'axe Z. D'autres efforts calibrés peuvent être appliqués sur le cadre de sollicitation suivant les axes X et Y, de façon excentrée ou non. La matrice de transformation des déplacements en efforts peut alors être générée à partir de l'ensemble des mesures de déplacements correspondantes, en utilisant une méthode de calibration décrite ci-dessous de façon générique. Les efforts peuvent être appliqués avec des amplitudes et des localisations prédéfinies sur le corps mobile 43, par exemple en fixant un support sur le corps mobile 43, permettant d'appliquer des poids en différents emplacements avec des bras de levier.

Pour extrapoler une matrice de transformation, on peut considérer qu'un plateau de mesure est relié à une embase fixe par l'intermédiaire de six capteurs d'efforts indépendants correspondant à 6 liaisons respectives.

On prendra par la suite les notations suivantes :

O un point d'origine ;
Ai une extrémité inférieure de la ième liaison entre le plateau de mesure et l'embase fixe ;
Bi une extrémité supérieure de la ième liaison entre le plateau de mesure et l'embase fixe ;
Fi : la force mesurée par le capteur d'indice i

$$\frac{\vec{A_i B_i}}{\left\| \vec{A_i B_i} \right\|} = \begin{pmatrix} u_i \\ v_i \\ w_i \end{pmatrix}$$

Un vecteur unitaire de la direction d'effort mesurée par le capteur d'indice i.

Le vecteur d'effort mesuré par le catpeur i peut aussi être exprimé par

$$\vec{f_i} = f_i \begin{pmatrix} u_i \\ v_i \\ w_i \end{pmatrix}$$

On définit les coordonnées des points Ai et Bi par :

$$\vec{OA_i} = \begin{pmatrix} xa_i \\ ya_i \\ za_i \end{pmatrix} \qquad \vec{OB_i} = \begin{pmatrix} xb_i \\ yb_i \\ zb_i \end{pmatrix}$$

On exprime les moments L, M et N selon les axes x, y et z à l'origine du système de coordonnées de la façon suivante :

$$M_O(f_i) = \vec{OA_i} \wedge \vec{f_i} = f_i \begin{pmatrix} (ya_i w_i - za_i v_i) \\ (za_i u_i - xa_i w_i) \\ (xa_i v_i - ya_i u_i) \end{pmatrix}$$

En sommant les forces et les moments exprimés à l'origine du système de coordonnées pour chaque axe de projection, on obtient :

$$\begin{pmatrix} F_x \\ F_y \\ F_z \\ L \\ M \\ N \end{pmatrix}_O = \begin{pmatrix} \sum f_i u_i \\ \sum f_i v_i \\ \sum f_i w_i \\ \sum f_i(ya_i w_i - za_i v_i) \\ \sum f_i(za_i u_i - xa_i w_i) \\ \sum f_i(xa_i v_i - ya_i u_i) \end{pmatrix}_O$$

Ce qui peut s'exprimer de la façon suivante sous forme d'équation matricielle :

$$\begin{pmatrix} F_x \\ F_y \\ F_z \\ L \\ M \\ N \end{pmatrix} = \begin{pmatrix} u_1 & u_2 & u_3 & u_4 & u_5 & u_6 \\ v_1 & v_2 & v_3 & v_4 & v_5 & v_6 \\ w_1 & w_2 & w_3 & w_4 & w_5 & w_6 \\ ya_1 w_1 - za_1 v_1 & \cdots & \cdots & \cdots & \cdots & ya_6 w_6 - za_6 v_6 \\ za_1 u_1 - xa_1 w_1 & \cdots & \cdots & \cdots & \cdots & za_6 u_6 - xa_6 w_6 \\ xa_1 v_1 - ya_1 u_1 & \cdots & \cdots & \cdots & \cdots & xa_6 v_6 - ya_6 u_6 \end{pmatrix} \begin{pmatrix} f_1 \\ f_2 \\ f_3 \\ f_4 \\ f_5 \\ f_6 \end{pmatrix}$$

Cette matrice permettant alors d'exprimer les 6 types d'effort appliqués à un plateau à partir de 6 mesures des capteurs.

La calibration du système consiste alors à appliquer des efforts connus et à réaliser des mesures pour les différents capteurs pour extrapoler la matrice. Ce principe de calibration peut aisément être transposé à des mesures de déplacements obtenus pour des efforts connus.

Des éléments mij d'une telle matrice peuvent notamment être déduits de la résolution de

$$[Y] = [A][X]$$

Avec

$$[X] = \begin{pmatrix} m_{11} \\ m_{12} \\ m_{13} \\ m_{14} \\ m_{15} \\ m_{16} \\ m_{21} \\ \cdots \\ m_{66} \end{pmatrix}$$

La matrice [A] peut alors être obtenue à partir de 6 mesures pour des efforts connus et exprimé de la façon suivante :

$$A = \begin{pmatrix} V_{11} & V_{21} & \cdots & V_{61} & 0 & & & & & & & & & & 0 \\ 0 & & \cdots & 0 & V_{11} & V_{21} & \cdots & V_{61} & 0 & & & & & & 0 \\ \vdots & & & & & & & & & & & & & & \\ 0 & & & & & & & & 0 & V_{11} & V_{21} & \cdots & V_{61} & 0 & & 0 \\ 0 & & & & & & & & & & 0 & V_{11} & V_{21} & \cdots & V_{61} \\ \vdots & & & & & & & & & & & & & & \\ V_{1p} & V_{2p} & \cdots & V_{6p} & 0 & & & & & & & & & & 0 \\ 0 & & \cdots & 0 & V_{1p} & V_{2p} & \cdots & V_{6p} & 0 & & & & & & 0 \\ \vdots & & & & & & & & & & & & & & \\ 0 & & & & & & & & 0 & V_{1p} & V_{2p} & \cdots & V_{6p} & 0 & & 0 \\ 0 & & & & & & & & & & 0 & V_{1p} & V_{2p} & \cdots & V_{6p} \end{pmatrix}$$

Avec Vip la mesure pour la liaison d'indice i lorsque une force p est appliquée.

La matrice Y est alors exprimée à partir du torseur appliqué à la structure :

$$Y = \begin{pmatrix} F_{x_1} \\ F_{y_1} \\ F_{z_1} \\ L_1 \\ M_1 \\ N_1 \\ F_{x_2} \\ \vdots \\ N_p \end{pmatrix}$$

On peut bien entendu appliquer plus de 6 efforts à la structure, ce qui conduit à la résolution d'un système surdéterminé, dont la solution peut être approximée par une méthode des moindres carrés.

Des simulations ont permis de déterminer une résolution de $10\mu N$ et 0,1N.mm à 50KHz respectivement pour les efforts suivant l'axe Z et les moments autour de l'axe Z. L'axe Z ayant été privilégié, la résolution des efforts selon les axes X ou Y est de $100\mu N$ et la résolution des moments autour des axes X ou Y est de 1 N.mm à 50kHz.

Pour une application particulière à des mesures de coefficients de frottement, on peut obtenir une incertitude de mesure de coefficient de l'ordre de $10^{-4}$ ou moins.

Les valeurs de réactions croisées mesurées entre les axes sont inférieures à 1% en efforts et en moment.

Le défaut de linéarité des mesures sur tous les axes est resté inférieur à 1% pour une gamme allant de 0,01N à 10 N.

La figure 6 est une vue en coupe de détail d'une variante de liaison entre le corps fixe 41 et le corps mobile intermédiaire 42. Dans cet exemple, des tiges indépendantes 63 sont introduites à travers les orifices 617. Des tiges inférieures 63 ont une extrémité comprimée entre l'entretoise 417 et l'entretoise 422 et une autre extrémité comprimée entre l'entretoise 412 et l'entretoise 413. Des tiges supérieures 63 ont une extrémité comprimée entre l'entretoise 422 et l'entretoise 421, et une autre extrémité comprimée entre l'entretoise 422 et l'entretoise 411.

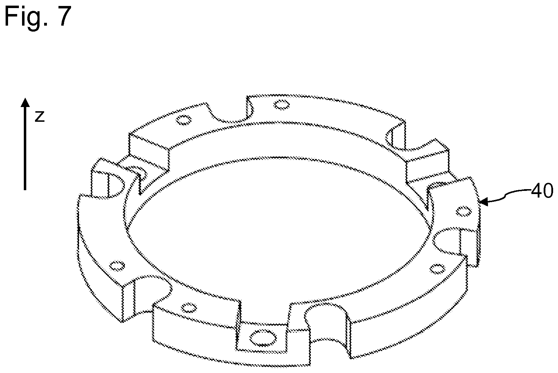

La figure 7 est une vue en perspective d'une embase 40 pour le corps fixe du support 4. L'embase 40 présente une forme annulaire délimitant un orifice dans sa partie centrale. L'embase 40 comporte une surface d'appui plate supérieure et une surface d'appui plate inférieure. L'embase comporte des lamages au niveau desquels des alésages traversants sont ménagés, afin respectivement de loger une tête de vis et de permettre le passage du corps de cette vis. De telles vis permettent de fixer l'embase 40 par exemple à un bâti d'une installation de test.

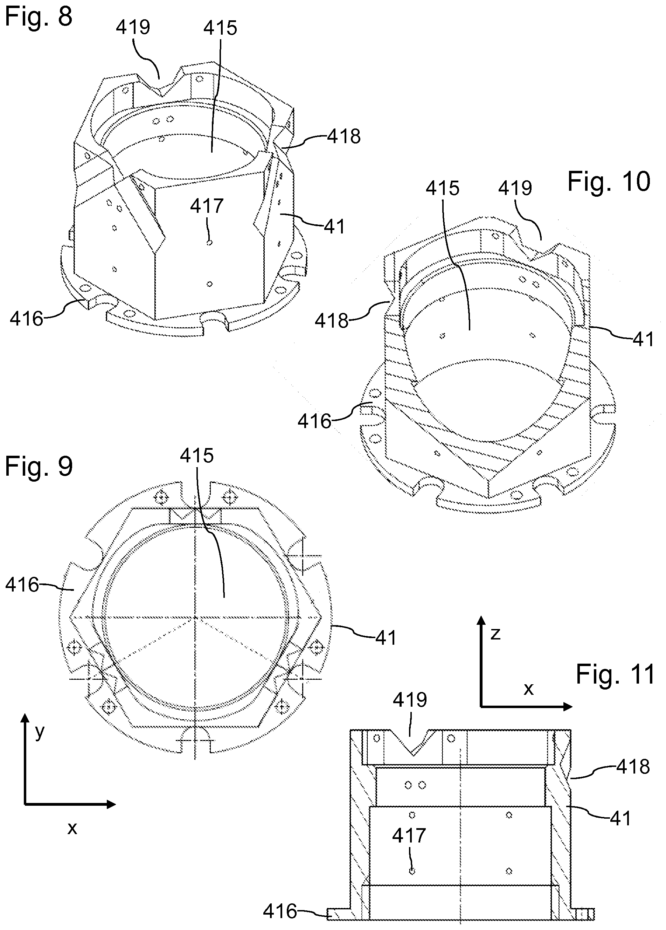

Les figures 8 à 11 sont différentes vues du corps fixe 41. Le corps fixe 41 comporte une collerette 416 dans sa partie inférieure. La face inférieure de la collerette 416 est plane et destinée à être positionnée contre l'embase 40. La partie tubulaire s'étend vers le haut depuis l'embase 416. Cette partie tubulaire présente une section externe hexagonale et une section interne circulaire.

Des orifices 417 sont ménagés dans les parois de la partie tubulaire et mettent en communication l'alésage 415 avec l'extérieur. Les orifices 417 peuvent à la fois faciliter la mise sous vide de l'alésage 415, ou permettre la fixation de tiges 63 telles qu'illustrées dans la variante de la figure 6.

Des rainures 418 sont ménagées dans des faces externes de la partie tubulaire. Ces rainures 418 sont orientées à 45° par rapport à la verticale. Les rainures 418 sont destinées à recevoir des capteurs sans contact 51. Les capteurs 51 positionnés dans les rainures 458 présentent des directions de mesure de déplacement non colinéaires dans la configuration illustrée. Des alésages filetés sont ménagés de part et d'autre de chaque rainure 418, de façon à permettre la fixation des brides 54 par l'intermédiaire de vis 53. Des encoches 419 sont ménagées au niveau de l'extrémité supérieure de la partie tubulaire. Ces encoches 419 sont positionnées à l'intersection entre deux rainures 418. Les encoches 419 permettent de positionner un support 44 pour miroirs, commun à deux capteurs sans contact 51. Les capteurs 51 peuvent ainsi être répartis par paires autour de l'axe Z.

Un épaulement est ménagé dans la partie supérieure de l'alésage 415 afin de pouvoir maintenir l'entretoise 411. La partie inférieure de l'alésage 415 est filetée, afin de permettre le vissage de la bague 414.

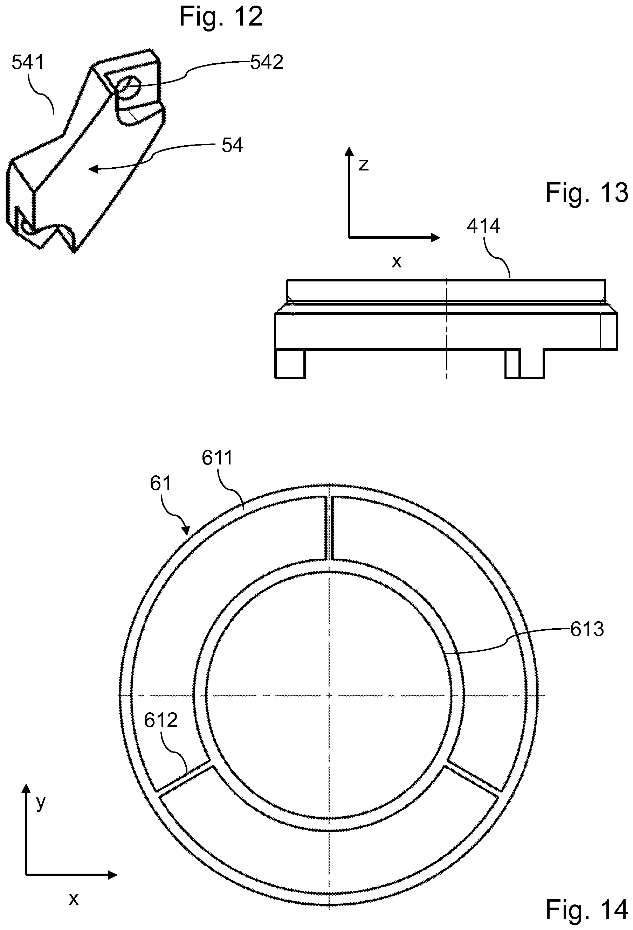

La figure 12 est une vue en perspective d'une bride 54 de fixation d'un capteur sans contact 51 sur le corps fixe 41. La bride 54 comporte une partie centrale dans laquelle une gorge 541 est ménagée. Des alésages 542 sont ménagés de part et d'autre de cette gorge 541. Les alésages 542 sont destinés à la fixation de la bride 54 sur le corps fixe 41 par des vis, de façon à positionner un capteur sans contact 51 dans la gorge 541 et à le maintenir pincé entre la bride 54 et le corps fixe 41.

La figure 13 est une vue de côté d'une bague de serrage 414 du corps fixe 41. Sur sa face inférieure, la bague de serrage 414 comporte des ergots permettant de l'entraîner en rotation autour d'un axe vertical. La bague de serrage 414 comporte un orifice dans sa partie centrale. La bague de serrage 414 présente une section cylindrique dans sa partie supérieure et une section cylindrique dans sa partie intermédiaire. La face externe de la partie intermédiaire comporte un filetage permettant de visser la bague de serrage 414 dans le corps fixe 41.

La figure 14 est une vue de dessus d'une pièce de liaison 61 d'une variante de mise en œuvre de l'invention. Cette pièce de liaison 61 comporte un anneau externe 611 et un anneau interne 613. L'anneau externe 611 est destiné à être fixé au corps fixe 41. L'anneau interne 613 est destiné à être fixé au corps mobile 42. L'anneau externe 611 et l'anneau interne 613 sont reliés par des tiges 612. Les tiges 612 sont ici au nombre de trois et sont réparties autour de l'axe Z. Les tiges 612 sont ici formées monobloc avec l'anneau externe 611 et l'anneau interne 613. On limite ainsi le nombre de composants nécessaires pour former le support 4, ce qui permet de limiter des dispersions mécaniques et de limiter le nombre de poches potentielles de gaz pour une application dans le vide.

La longueur de chacune des tiges 612 est ici relativement élevée par rapport à sa section. La relation suivante peut par exemple être respectée : $L > 10 * \sqrt{(S)}$ avec L la longueur d'une tige 612 et S sa section transversale. Ainsi, un effort exercé selon la direction Z sur l'anneau interne 613 permet de faire fléchir une poutre 612, ce qui permet d'induire une translation du corps mobile 42 par rapport au corps fixe 41. Par ailleurs, un couple exercé sur l'anneau interne 613 autour de la direction Z permet d'induire un déplacement en rotation du corps mobile 42 par rapport au corps fixe 41. Le corps mobile 42 peut également être guidé en rotation par rapport audit corps 41 par d'autres moyens que par les tiges 612.

A contrario, chacune des tiges 612 s'avère rigide face à des sollicitations en contraction/compression selon sa longueur. Ainsi, les déplacements du corps mobile 42 par rapport au corps fixe 41 dans le plan X, Y présentent une amplitude extrêmement réduite.

Une telle pièce de liaison 61 est avantageusement démontable pour être séparée du corps fixe 41 et du corps mobile 42. Ainsi, par remplacement des pièces de liaison 61 par d'autres pièces de liaison ayant des tiges de sections différentes, on peut adapter différentes rigidités de la liaison entre le corps fixe 41 et le corps mobile 42 en conservant les autres pièces du support 4. On peut ainsi adapter l'amplitude des déplacements entre le corps fixe 41 et le corps mobiles 42 aux efforts à appliquer, afin de rester dans une gamme de déformation élastique de la pièce de liaison 61.

Dans l'exemple illustré, six tiges 612 assurent la liaison entre le corps fixe 41 et le corps mobiles intermédiaires 42. Ces tiges 612 présentent une section transversale carrée de 1 mm de côté en acier inoxydable. De telles tiges 612 s'avèrent par exemple appropriées pour appliquer une force selon l'axe Z de 50N sur le corps mobile 42, ou pour appliquer un couple autour de l'axe Z de 100 $\mu$N sur le corps mobile 42.

De façon générale, les pièces de liaison 61 et les pièces de liaison 62 permettent avantageusement d'obtenir une course de déplacement du corps de support 43 par rapport au corps fixe 41 d'une amplitude au moins 50 fois inférieure à la distance entre deux quelconques des capteurs 51. On peut ainsi caractériser un déplacement relatif entre le corps de support 43 et le corps fixe 41 de faible amplitude, pour lequel la relation entre les efforts appliqués et les déplacements obtenus présente une grande linéarité.

L'indépendance entre les pièces de liaison 61 et 62 permet aisément de dissocier la résolution de mesure suivant différents axes d'efforts, en fonction des besoins.

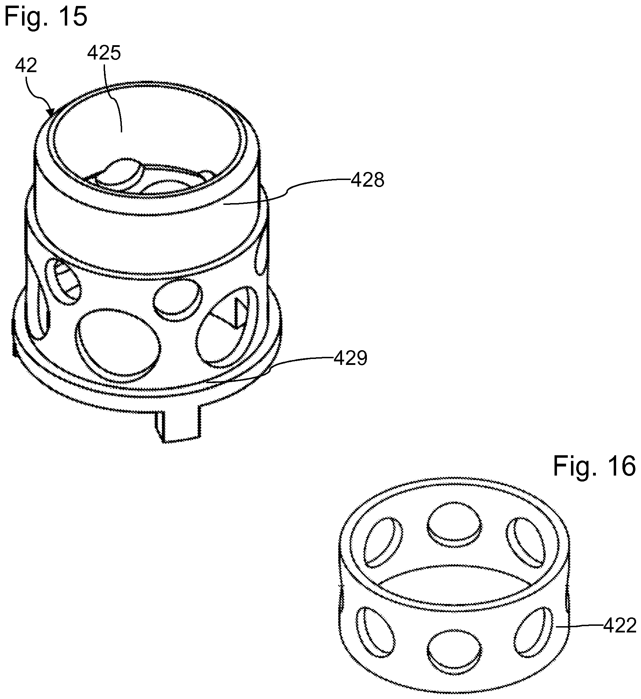

La figure 15 est une vue en perspective du corps mobile intermédiaire 42 sur lequel différents éléments viennent se fixer. Le corps mobile 42 comporte un alésage traversant 425 en son centre. Le corps mobile 42 présente une partie cylindrique 428 dans sa partie supérieure, cette partie cylindrique entourant l'alésage 425 et ayant une face externe filetée.

L'alésage traversant 425 fournit un accès permettant d'atteindre le corps mobile de support 43 par le dessous. Ainsi, une instrumentation de mesure, une caméra ou une résistance de chauffage peuvent être positionnées à proximité du corps mobile 43 et de l'échantillon qu'il peut être amené à supporter.

La partie inférieure du corps mobile 42 est avantageusement ajourée, afin de faciliter la mise sous vide dans l'alésage traversant 425. Le corps mobile 42 comporte un épaulement 429 dans sa partie inférieure afin de permettre un maintien d'une entretoise 423. Par ailleurs, le corps mobile 42 présente des ergots au niveau de son extrémité inférieure, afin de permettre son entraînement en rotation.

La figure 16 est une vue en perspective d'une entretoise 422 pour le corps mobile intermédiaire 42. L'entretoise 422 présente un alésage traversant dans sa partie centrale. L'entretoise 422 est destinée à venir à l'aplomb de l'épaulement 429, pour permettre un maintien de l'anneau interne entre cette entretoise 422 et l'épaulement 429. La paroi latérale de l'épaulement 422 est avantageusement ajourée afin de faciliter la mise sous vide dans l'alésage traversant 425.

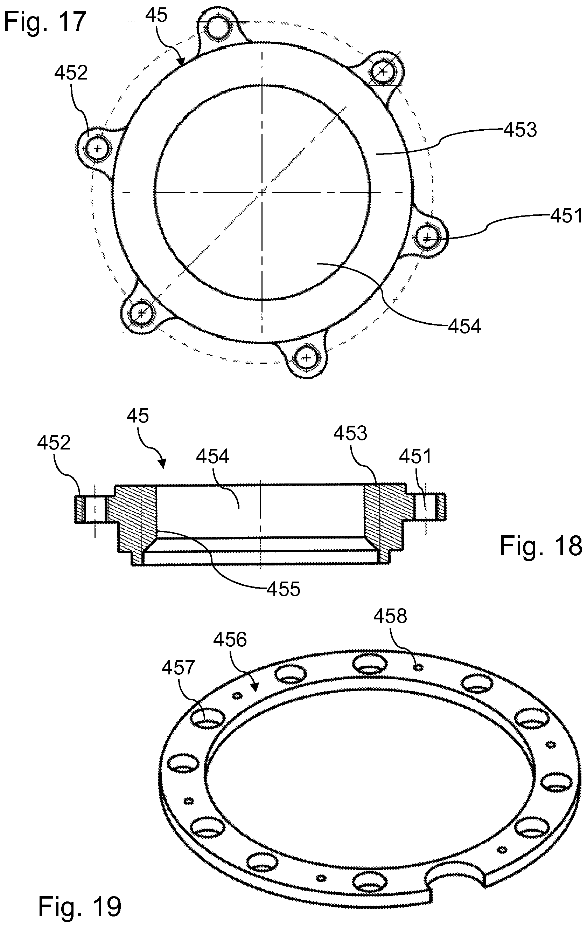

Les figures 17 et 18 illustrent une bague de serrage 45 pour le corps mobile intermédiaire 42. La bague de serrage 45 comporte une partie cylindrique 453. Un alésage traversant 454 est ménagé dans la partie centrale de la partie cylindrique 453. Des ergots 452 sont en saillie radialement vers l'extérieur depuis la partie cylindrique 453. Des alésages filetés verticaux sont ménagés dans les ergots 452. La face supérieure des ergots 452 est plate. La paroi 455 de l'alésage 454 est filetée. La bague de serrage 45 peut aussi venir se visser sur la partie cylindrique 428. Un épaulement est ménagé dans la partie inférieure de la bague de serrage 45, de façon à pouvoir maintenir un anneau 613 entre cet épaulement et l'entretoise 422.

La figure 19 illustre une plaque annulaire 456 appartenant au corps mobile intermédiaire 42. Un alésage est ménagé en son centre. Cet alésage central est destiné à se positionner autour de la partie cylindrique 453 de la bague de serrage 45. La plaque annulaire 456 comporte des faces supérieure et inférieure plates. La face inférieure de la plaque 456 vient se plaquer contre les ergots 452 de la bague de serrage 45. Des alésages traversants 457 sont ménagés dans sa partie annulaire. Les alésages 457 sont avantageusement répartis angulairement autour de l'alésage central. Les alésages 457 sont destinés à être traversés par une vis et sont destinés à être disposés en vis-à-vis des alésages 451 de la bague 45. Des alésages traversants 458 sont également ménagés dans la partie annulaire. Les alésages 458 sont avantageusement répartis angulairement autour de l'alésage central. Les alésages 458 sont destinés à recevoir une extrémité d'une tige 62.

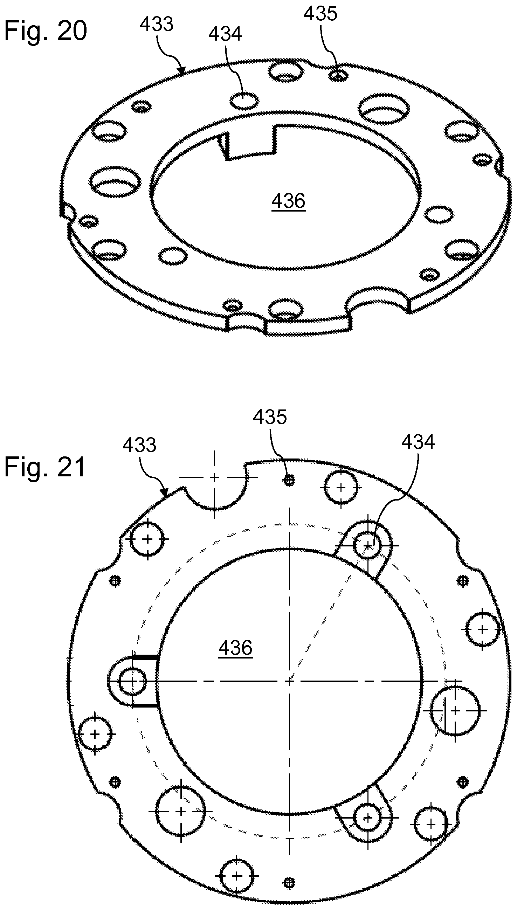

Les figures 20 et 21 illustrent une plaque annulaire 433 appartenant au corps de support 43. Un alésage 436 est ménagé en son centre. La plaque annulaire 433 comporte une face supérieure plate ménagée dans sa partie annulaire. Des alésages traversants 435 sont ménagés dans la partie annulaire. Les alésages 435 sont avantageusement répartis angulairement autour de l'alésage 436. Des alésages filetés 434 sont ménagés dans la partie annulaire et se prolongent dans des plots en saillie depuis une face inférieure de la plaque.

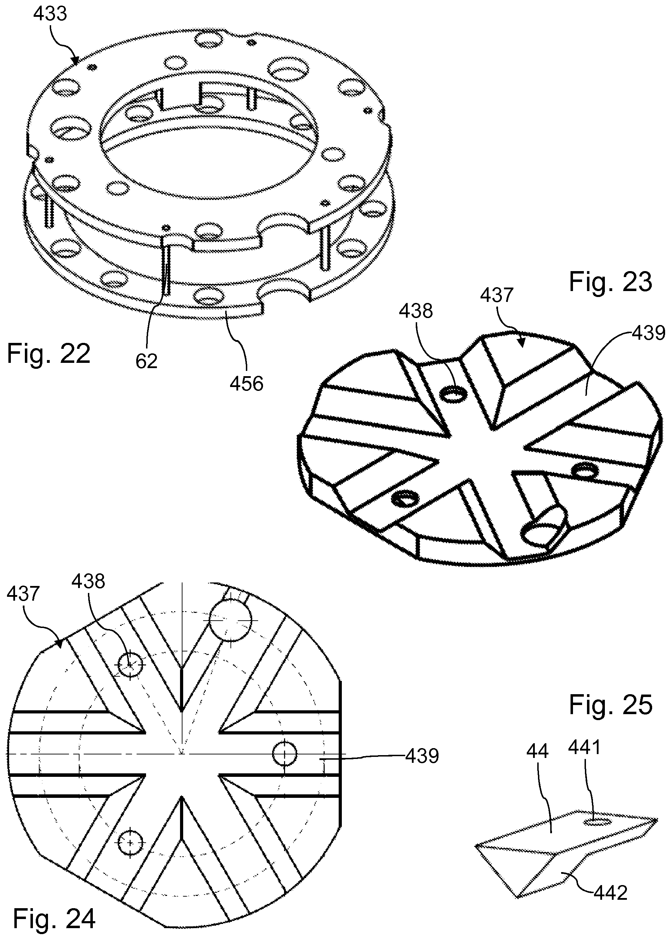

La figure 22 illustre une plaque annulaire 433 reliée à une plaque annulaire 456 par l'intermédiaire de tiges 62. Les tiges 62 sont orientées verticalement. Les tiges 62 ont une extrémité encastrée dans des alésages respectifs de la plaque annulaire 433 et une autre extrémité encastrée dans des alésages respectifs de la plaque annulaire 456.

Les figures 23 et 24 illustrent une platine porte échantillon 437. La platine 437 comporte des rainures 439 se rejoignant en son centre et orientées à 60° les unes par rapport aux autres. Certaines rainures comportent des alésages traversants 438. La platine 437 peut être configurée pour la fixation d'un échantillon ou d'un porte échantillon. La platine 437 comporte ici une face inférieure plane et des plots sur sa face supérieure, formant des surfaces planes.

La figure 25 est une vue en perspective d'un exemple de support 44 pour miroir. Le support 44 comporte une face supérieure plane et une extrémité de fixation dont la face inférieure est plane. Un alésage 441 est ménagé à travers l'extrémité de fixation. Cette face inférieure est destinée à venir se loger dans une rainure 439 de la platine 437. L'alésage 441 est destiné à une fixation par une vis 432 venant en prise dans l'alésage fileté 434 de la plaque annulaire 433. Une telle vis 432 traverse un alésage 438 de la platine 437. La platine 437 est ainsi maintenue plaquée entre les supports 44 et la plaque annulaire 433.

Le support 44 comporte une extrémité placée en saillie par rapport à la platine 437. Cette extrémité présente ici des surfaces inclinées et réfléchissantes 442. Les surfaces 442 sont ici obtenues par polissage d'un support 44 en acier. Les surfaces 442 sont ici inclinées à 45° par rapport à la face supérieure plane du support. Chaque surface 442 est donc ici parallèle à l'extrémité d'un capteur capacitif 51 respectif et positionné en vis-à-vis.

La fixation des capteurs avec une inclinaison (par rapport aux degrés de liberté définis entre le corps 41, le corps 42 et le corps 43) permet d'améliorer la précision de la mesure en induisant une redondance de mesure pour un même degré de liberté.

Le dispositif de traitement 2 inclut avantageusement un réseau de portes programmables in situ (usuellement désigné par le terme FPGA) connecté au capteur sans contact 51 est configuré pour extrapoler les efforts appliqués sur le corps 43 en fonction des déplacements mesurés par les capteurs 51. Un tel dispositif de traitement 2 permet par exemple de disposer d'un calcul des efforts quasiment en temps réel, ce qui permet par exemple de réaliser un asservissement avec une consigne de valeur d'effort. Un tel dispositif de traitement 2 permet également de choisir entre des valeurs d'effort moyennes ou des valeurs d'effort instantanées. Un tel réseau de portes programmables peut par exemple être mis en œuvre sous la forme d'un contrôleur commercialisé sous la référence 9224 associé à des modules d'acquisition analogique commercialisés sous la référence CompactRIO 9239 par la société National Instruments.

La plupart des composants du support seront avantageusement réalisés en acier inoxydable. Un tel matériau s'avère particulièrement avantageux dans le cadre de mesures effectuées dans le vide, du fait de la très faible quantité de composés volatils qu'il est à même d'émettre.

Dans l'exemple illustré, on utilise des capteurs 51 sans contact de type capacitif. De tels capteurs s'avèrent en particulier avantageux pour de faibles courses de déplacement entre le corps fixe 41 et le corps mobiles 43. Des mesures ont été réalisées en associant des capteurs commercialisés sous la référence MCC10 par la société Fogale avec des électroniques associées commercialisées sous la référence MC900. Les signaux ont été acquis via des convertisseurs delta sigma 24 bits anti repliés de référence NI-9239. Les signaux de déplacements ont été acquis à 50kHz, puis filtrés numériquement au moyen d'un filtre passe bas de Tchebitchev d'ordre 2 réglés sur 10Hz. Les résolutions obtenues sont de quelques $\mu$N en forces, et de quelques $1.10^{-4}$ N.m sur les moments. D'autres types de capteurs sans contact peuvent également être utilisés, en fonction des applications visées.

On peut par exemple également envisager de remplacer les capteurs capacitifs 51 par des capteurs interférométriques de déplacement, tels que le capteur commercialisé sous la référence ECS3040 par la société AttoCube. Les miroirs sont alors par exemple placés en vis-à-vis de tels capteurs. De tels capteurs s'avèrent par exemple particulièrement avantageux dans un environnement à haute température et lorsque de tels capteurs sont distants de leur circuit de traitement.

On peut également envisager de remplacer les capteurs capacitifs 51 par des capteurs optiques de déplacement. De tels capteurs optiques sont par exemple basés sur la réceptivité d'un signal lumineux vers une fibre optique.

On peut encore envisager de remplacer les capteurs capacitifs 51 par des capteurs de déplacement du type à courant de Foucault.

Dans l'exemple illustré, le corps 41 et le corps 42 sont reliés par l'intermédiaire de tiges 612. On peut cependant envisager d'autres types de liaison, par exemple une liaison par une (ou plus) membrane annulaire flexibles et s'étendant au repos dans un plan comprenant les axes X et Y.

Ces membranes peuvent être ajourées de manière à créer des sensibilités différentes en fonction de l'utilisation du capteur.

Pour éviter la formation de poches de gaz néfastes à une application dans le vide, tous les alésages des composants du support 4 sont avantageusement débouchants.

## Revendications

1. Dispositif de mesure d'efforts, comprenant :

   - un premier corps (41) destiné à être immobilisé ;
   - un deuxième corps (42) guidé selon au moins une première direction de translation par rapport au premier corps par l'intermédiaire d'au moins une première liaison déformable élastiquement (61) ;
   - un troisième corps (43) destiné à être sollicité et guidé selon au moins trois degrés de liberté par rapport au deuxième corps par l'intermédiaire d'au moins une deuxième liaison déformable élastiquement selon une deuxième direction perpendiculaire à la première, ladite deuxième liaison étant rigide (62) selon ladite première direction;

- au moins des premier à quatrième capteurs sans contact (51) du déplacement du troisième corps par rapport au premier corps, lesdits premier à quatrième capteurs mesurant ledit déplacement selon quatre directions respectives ;
- un circuit de traitement (2) calculant des efforts appliqués sur ledit troisième corps en fonction des déplacements mesurés par lesdits premier à quatrième capteurs;

**Caractérisé en ce que**:

- lesdits premier à quatrième capteurs sans contact du déplacement du troisième corps par rapport au premier corps mesurent ledit déplacement selon quatre directions respectives non colinéaires.

2. Dispositif de mesure d'efforts selon la revendication 1, dans lequel ledit deuxième corps (42) est également guidé en rotation autour de ladite première direction par rapport audit premier corps (41) par l'intermédiaire de ladite première liaison.

3. Dispositif de mesure d'efforts selon la revendication 2, dans lequel ladite première liaison comprend au moins trois tiges (612) perpendiculaires à ladite première direction et réparties angulairement autour de cette première direction.

4. Dispositif de mesure d'efforts selon la revendication 3, dans lequel ladite première liaison comprend deux anneaux concentriques (611, 613), lesdites trois tiges (612) étant formées monobloc avec lesdits deux anneaux concentriques, le premier anneau concentrique (611) étant fixé au premier corps, le deuxième anneau concentrique (613) étant fixé au deuxième corps.

5. Dispositif de mesure d'efforts selon la revendication 3 ou 4, dans lequel chacune desdites tiges (612) est rigide selon une direction respective perpendiculaire à ladite première direction.

6. Dispositif de mesure d'efforts selon l'une quelconque des revendications précédentes, dans lequel ladite deuxième liaison (62) comprend au moins trois tiges parallèles à ladite première direction et réparties angulairement autour de ladite première direction.

7. Dispositif de mesure d'efforts selon l'une quelconque des revendications précédentes, dans lequel lesdits capteurs sans contact (51) sont des capteurs capacitifs et dans lequel des premier à quatrième miroirs (442) sont fixés audit troisième corps (43) en vis-à-vis des premiers à quatrième capteurs respectivement.

8. Dispositif de mesure d'efforts selon la revendication 7, comprenant des cinquième et sixième capteurs sans contact du déplacement du troisième corps par rapport au premier corps selon deux directions respectives non colinéaires avec les directions de mesure de déplacement desdits premiers à quatrième capteur sans contact.

9. Dispositif de mesure d'efforts selon la revendication 8, dans lequel lesdits capteurs sont répartis par paires autour de ladite première direction.

10. Dispositif de mesure d'efforts selon l'une quelconque des revendications précédentes, dans lequel la course de déplacement du troisième corps par rapport au premier corps selon une direction quelconque est au moins 50 fois inférieure à la distance entre deux quelconques desdits capteurs.

11. Dispositif de mesure d'efforts selon l'une quelconque des revendications précédentes, dans lequel lesdits capteurs sont connectés à au moins un réseau de portes programmables in situ inclus dans ledit circuit de traitement et extrapolant des efforts appliqués sur ledit troisième corps en fonction des déplacements mesurés par lesdits premier à quatrième capteurs.

**Patentansprüche**

1. Kraftmessvorrichtung, umfassend:

- einen ersten Körper (41), der dazu ausgestaltet ist, immobilisiert zu sein;
- einen zweiten Körper (42), der entlang mindestens einer ersten Translationsrichtung in Bezug auf den ersten Körper über mindestens eine erste elastisch verformbare Verbindung (61) geführt wird;

- einen dritten Körper (43), der dazu ausgestaltet ist, gemäß mindestens drei Freiheitsgraden in Bezug auf den zweiten Körper über mindestens eine zweite elastisch verformbare Verbindung entlang einer zweiten Richtung, die senkrecht zur ersten verläuft, belastet und geführt zu werden, wobei die zweite Verbindung (62) entlang der ersten Richtung starr ist;

- mindestens erste bis vierte berührungslose Sensoren (51) für die Verlagerung des dritten Körpers in Bezug auf den ersten Körper, wobei die ersten bis vierten Sensoren die Verlagerung entlang von vier jeweiligen Richtungen messen;

- eine Verarbeitungsschaltung (2), welche auf den dritten Körper ausgeübte Kräfte in Abhängigkeit von den von den ersten bis vierten Sensoren gemessenen Verlagerungen berechnet, **dadurch gekennzeichnet, dass**:

    - die ersten bis vierten berührungslosen Sensoren für die Verlagerung des dritten Körpers in Bezug auf den ersten Körper die Verlagerung entlang von vier jeweiligen nicht kollinearen Richtungen messen.

2. Kraftmessvorrichtung nach Anspruch 1, bei welcher der zweite Körper (42) auch rotatorisch um die erste Richtung herum in Bezug auf den ersten Körper (41) über die erste Verbindung geführt wird.

3. Kraftmessvorrichtung nach Anspruch 2, bei der die erste Verbindung mindestens drei Stäbe (612) umfasst, die senkrecht zu der ersten Richtung verlaufen und winklig um diese erste Richtung herum verteilt sind.

4. Kraftmessvorrichtung nach Anspruch 3, bei der die erste Verbindung zwei konzentrische Ringe (611, 613) umfasst, wobei die drei Stäbe (612) einstückig mit den beiden konzentrischen Ringen gebildet sind, wobei der erste konzentrische Ring (611) an dem ersten Körper fixiert ist, wobei der zweite konzentrische Ring (613) an dem zweiten Körper fixiert ist.

5. Kraftmessvorrichtung nach Anspruch 3 oder 4, bei der jeder der Stäbe (612) entlang einer jeweiligen Richtung, die senkrecht zur ersten Richtung verläuft, starr ist.

6. Kraftmessvorrichtung nach einem der vorhergehenden Ansprüche, bei der die zweite Verbindung (62) mindestens drei Stäbe umfasst, die parallel zu der ersten Richtung verlaufen und winklig um die erste Richtung herum verteilt sind.

7. Kraftmessvorrichtung nach einem der vorhergehenden Ansprüche, bei der die berührungslosen Sensoren (51) kapazitive Sensoren sind und bei der erste bis vierte Spiegel (442) an dem dritten Körper (43) jeweils gegenüber den ersten bis vierten Sensoren fixiert sind.

8. Kraftmessvorrichtung nach Anspruch 7, umfassend fünfte und sechste berührungslose Sensoren für die Verlagerung des dritten Körpers in Bezug auf den ersten Körper entlang von zwei jeweiligen Richtungen, die nicht kollinear zu den Verlagerungsmessrichtungen der ersten bis vierten berührungslosen Sensoren sind.

9. Kraftmessvorrichtung nach Anspruch 8, bei der die Sensoren paarweise um die erste Richtung herum verteilt sind.

10. Kraftmessvorrichtung nach einem der vorhergehenden Ansprüche, bei welcher der Verlagerungsweg des dritten Körpers in Bezug auf den ersten Körper entlang einer beliebigen Richtung mindestens 50 Mal kleiner als der Abstand zwischen zwei beliebigen der Sensoren ist.

11. Kraftmessvorrichtung nach einem der vorhergehenden Ansprüche, bei der die Sensoren an mindestens ein feldprogrammierbares Gate Array angeschlossen sind, das in der Verarbeitungsschaltung enthalten ist und auf den dritten Körper ausgeübte Kräfte in Abhängigkeit von den von den ersten bis vierten Sensoren gemessenen Verlagerungen extrapoliert.

**Claims**

1. Device for measuring forces, comprising:

    - a first body (41) that is intended to be immobilized;
    - a second body (42) that is guided in translation in at least a first direction with respect to the first body via at least one first elastically deformable connection (61);
    - a third body (43) that is intended to be subjected to a force and guided in at least three degrees of freedom with respect to the second body via at least one second elastically deformable connection in a second direction perpendicular to the first, said second connection being rigid (62) in said first direction;
- at least first to fourth contactless sensors (51) for sensing the movement of the third body with respect to the first body, said first to fourth sensors measuring said movement in four respective directions;
- a processing circuit (2) that calculates the forces applied to said third body depending on the movements measured by said first to fourth sensors; **characterized in that**:

    - said first to fourth contactless sensors for sensing the movement of the third body with respect to the first body measure said movement in four respective non-collinear directions.

2. Device for measuring forces according to Claim 1, wherein said second body (42) is also guided in rotation about said first direction with respect to said first body (41) via said first connection.

3. Device for measuring forces according to Claim 2, wherein said first connection comprises at least three rods (612) that are perpendicular to said first direction and distributed angularly about this first direction.

4. Device for measuring forces according to Claim 3, wherein said first connection comprises two concentric rings (611, 613), said three rods (612) being formed integrally with said two concentric rings, the first concentric ring (611) being fixed to the first body, the second concentric ring (613) being fixed to the second body.

5. Device for measuring forces according to Claim 3 or 4, wherein each of said rods (612) is rigid in a respective direction perpendicular to said first direction.

6. Device for measuring forces according to any one of the preceding claims, wherein said second connection (62) comprises at least three rods that are parallel to said first direction and distributed angularly about said first direction.

7. Device for measuring forces according to any one of the preceding claims, wherein said contactless sensors (51) are capacitive sensors, and wherein first to fourth mirrors (442) are fixed to said body (43) facing the first to fourth sensors, respectively.

8. Device for measuring forces according to Claim 7, comprising fifth and sixth contactless sensors for sensing the movement of the third body with respect to the first body in two respective directions that are non-collinear with the movement measuring directions of said first to fourth contactless sensors.

9. Device for measuring forces according to Claim 8, wherein said sensors are distributed in pairs about said first direction.

10. Device for measuring forces according to any one of the preceding claims, wherein the movement path of the third body with respect to the first body in any direction is at least 50 times smaller than the distance between any two of said sensors.

11. Device for measuring forces according to any one of the preceding claims, wherein said sensors are connected to at least one in situ programmable gate array that is included in said processing circuit and extrapolates forces applied to said third body depending on the movements measured by said first to fourth sensors.

Fig. 1

Fig. 2

Fig. 3

Fig. 4

Fig. 5

Fig. 6

Fig. 7

Fig. 8

Fig. 9

Fig. 10

Fig. 11

Fig. 12

541     542

54

Fig. 13

z

414

x

611

61

613

612

y

x

Fig. 14

Fig. 15

Fig. 16

Fig. 17

45

452

453

451

454

Fig. 18

45

452

453

454

451

455

458

456

457

Fig. 19

Fig. 20

Fig. 21

Fig. 22

Fig. 23

Fig. 24

Fig. 25

**EP 3 308 120 B1**

## RÉFÉRENCES CITÉES DANS LA DESCRIPTION

**Documents brevets cités dans la description**

- WO 2012153643 A
- US 2011239783 A
- US 6363798 B
- US 20130061689 A

**Littérature non-brevet citée dans la description**

- **HIRZINGER.** Multi sensor system fur roboter. Technisches Messen TM, R.Oldenbourg Verlag, 01 Janvier 1986, vol. 53, 286-292